# EUROPEAN PATENT SPECIFICATION

(11) **EP 0 443 217 B1**
(45) Date of publication and mention of the grant of the patent: **09.06.1993**
(21) Application number: 90203291.1
(22) Date of filing: 12.12.1990
(51) Int. Cl.: B62H 5/14

(54) **Bicycle lock**
Fahrradschloss
Serrure de bicyclette

(30) Priority: 22.02.1990 NL 9000430
(43) Date of publication of application: 28.08.1991
(73) Proprietor: STENMAN HOLLAND B.V., NL-3903 AV Veenendaal (NL)
(72) Inventor: Gussinklo, Paul Gerhard, NL-6932 DA Westervoort (NL)
(74) Representative: Timmers, Cornelis Herman Johannes

(56) References cited:
- DE-A- 2 739 983
- DE-A- 2 828 924
- DE-A- 2 836 530
- DE-A- 3 308 977
- NL-A- 8 300 938

## Description

The invention relates to a bicycle lock of the type described in the introductory part of claim 1, and known per se from NL-A-8300938.

In this known lock the protective lip running from the rear side of the housing to the front side of the lock and containing the shackle is formed in one operation with, and is integral with the lock housing. This lock housing is made from zinc by die casting, and it is true that this material is hard, but is also brittle, so that the housing as such is in fact difficult to force. Nevertheless the transition between housing and protective lip situated at the back of the lock can be broken with a sharp tool after forcing the back plate, thereby making the locking shackle accessible.

The object of the invention is to eliminate this disadvantage. This object is achieved according to the invention in that the lip goes out from the bottom edge of a guard plate made of hard and tough material and fitted between the housing and the back plate.

This plate can, for example, be made of hardened steel, which is virtually impossible to force.

This measure not only provides greater protection against destruction of the lock, but also greatly simplifies the fitting of the lock.

The guard plate is preferably extended at the lock control button side to form a stop for the locking shackle in the open position thereof. In the known lock the edge of the top plate acted as a stop, so that a dent soon occurred during use, followed by corrosion at the side which is accessible. This disadvantage is also eliminated in the lock according to the invention.

Preferred embodiments are described in claims 3 to 6, it being pointed out with regard to the measures according to claims 3-5 that they make it possible to fix the lock in a simple manner to the rear fork of a bicycle, while the measure according to claim 6 provides additional protection against forcing of the lock.

The invention is elucidated with reference to the drawing, in which:
Figure 1 is a perspective view of the bicycle lock according to the invention, in disassembled form;
Figure 2 is a cross-section on an enlarged scale through a part of said lock;
Figure 3 is a partial front view of the lock housing with the guard plate and the locking shackle;
Figure 4 is a cross-section corresponding to that according to Figure 2 of a modified embodiment;
Figure 5 is a cross-section corresponding to that according to Figure 2 of yet another embodiment;
Figure 6 is a partially cut-away rear view of the lock according to the invention.

The bicycle lock according to the invention shown in the figures, which is of the known shackle type, comprises the usual back plate 2 and the lock case 4 which connects thereto and is designed in the known manner with a chamber 6 and the curved guides 8, 10 going out therefrom for the locking shackle 12 which bears the control button 14 and is connected to the end of the tension spring 16. The lock case 4 and the guides 8, 10 also have fitted in them the fixed protective shackle 18 having at the end thereof the hook 20, connected to the other end of the spring 16.

The chamber 6 contains the lock housing 22 with the lock cylinder 24 by means of which the locking catch 26 is operated.

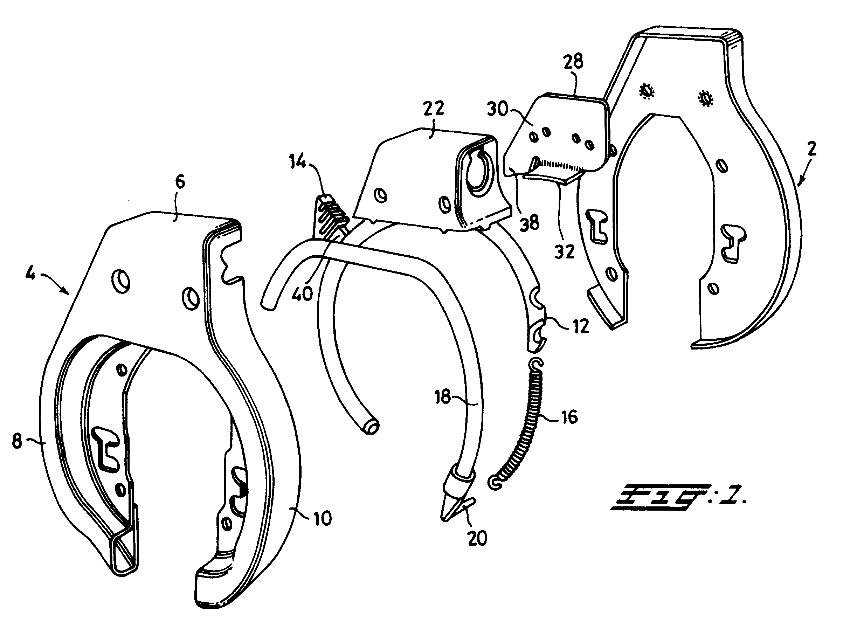

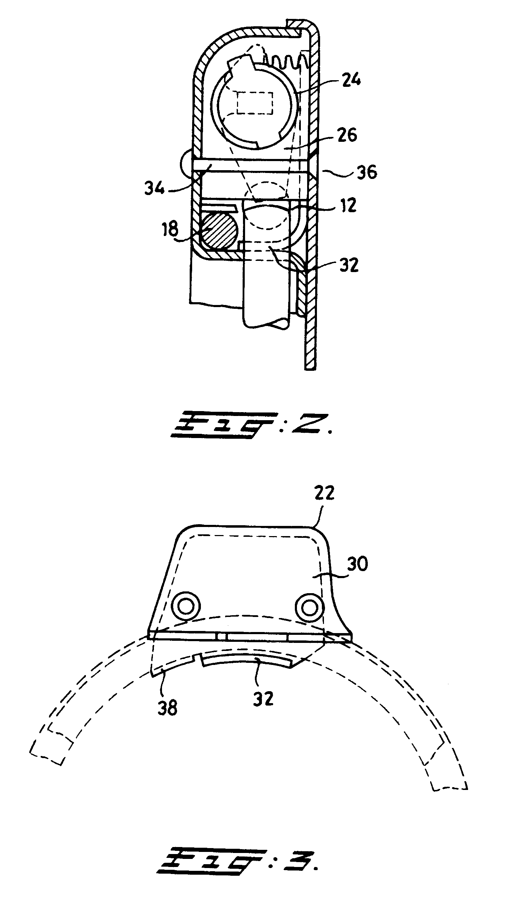

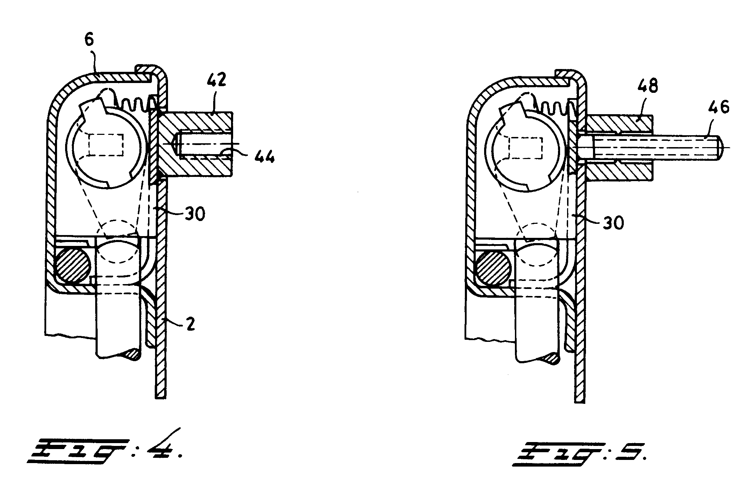

According to the invention, an additional guard plate 28 is fitted behind this housing 22, which plate comprises a flat part 30 and a lip 32 projecting forward out of it. As can be seen from Figures 2 and 3, this lip 32 engages below the locking shackle 12 and extends to the protective shackle 18. Since the guard plate is made of a very hard and tough material such as a K50 steel, far-reaching protection against forcing of the lock is obtained.

The guard plate 28 is also provided with an extended part 38 which acts as a stop for the fixing lip 40 of the control button 14. In the design of the shackle lock which is known per se, this fixing lip 40 stops against an edge of the lock case 4, which consequently becomes dented after a time.

The two lock parts 2 and 4 are held together in the usual manner by rivets 34 which pass through housing 22 and guard plate 28, and which are countersunk as indicated by 36 in Figure 2.

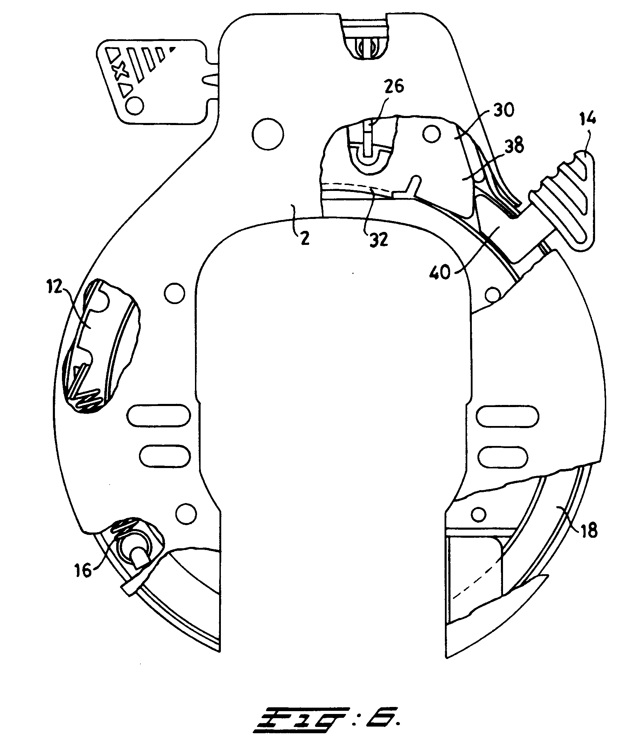

Figure 4 shows an embodiment in which two sleeves 42 are welded to the flat part 30 of the back plate 28, each with a threaded internal bore 44. This permits easy and rapid fixing of the lock to the rear fork of a bicycle.

Such a fixing possibility is indicated in Figure 5: in this case two threaded ends 46 are welded to the flat part 30 of the guard plate 28, each provided with a spacer sleeve 48.

Finally, Figure 6 shows a partially cut-away rear view of the lock according to the invention, in the open position. It can be seen clearly from this figure how the extended part 38 acts as a stop for the lip 40 of the button 14, and how the lip 32 of the guard plate 30 - which cannot be forced - provides excellent protection, even when the top side of the back plate 2 is forced.

## Claims

1. Bicycle lock of the shackle type, comprising a lock case (4) formed from a front (4) and back plate (2) and having a chamber (6) in which is fitted a lock housing (22) accommodating the lock and locking mechanism, and having two curved guides (8, 10), going out on either side of said chamber, for the locking shackle (12), which shackle (12) is surrounded by a protective lip (32) extending from the rear side of the lock housing (22) to the front side of the lock, **characterized in that** said lip (32) goes out from the bottom edge of a guard plate (28) made of hard and tough material and fitted between the lock housing (22) and the back plate (2).

2. Bicycle lock according to claim 1, **characterized in that** said guard plate (28) is extended at the lock control button side to form a stop (38) for the locking shackle (12) in its open position.

3. Bicycle lock according to claim 1-2, **characterized in that** the guard plate (28) bears a fixing element lying at right angles thereto and passing through the back plate (2), for fixing the lock to the rear fork.

4. Bicycle lock according to claim 3, **characterized in that** said fixing elements comprise threaded ends (46).

5. Bicycle lock according to claim 3, **characterized in that** said fixing elements comprise threaded sleeves (42).

6. Bicycle lock according to claims 1-5, **characterized in that** the lock front plate (4), the housing, the guard plate (28) and the back plate (2) are connected to each other by rivets (34) which pass through these parts and the heads of which are countersunk.

## Patentansprüche

1. Bügelartiges Fahrradschloß, mit einer Schloßverkleidung (4), welche aus einer vorderen Platte (4) und einer hinteren Platte (2) besteht und eine Kammer (6) aufweist, in welcher ein Schloßgehäuse (22) aufgenommen ist, welches das Schloß und den Schließmechanismus aufnimmt, wobei zwei gekrümmte Führungen (8, 10), die von jeder Seite der Kammer ausgehen, für den Verriegelungsbügel (12) vorgesehen sind, der von einer schützenden Lippe (32) umgeben ist, welche sich von der rückwärtigen Seite des Schloßgehäuses (22) zur Vorderseite des Schlosses ertreckt, dadurch **gekennzeichnet,** daß sich die Lippe (32) vom Bodenrand einer Schutzplatte (28) aus hartem und zähem Material erstreckt, die zwischen dem Schloßgehäuse (22) und der hinteren Platte (2) aufgenommen ist.

2. Fahrradschloß nach Anspruch 1, dadurch gekennzeichnet, daß die Schutzplatte (28) an der Schloßsteuerknopf-Seite verlängert ist, um einen Anschlag (38) für den Schließbügel (12) in dessen Offenlage zu bilden.

3. Fahrradschloß nach Anspruch 1, dadurch gekennzeichnet, daß die Schutzplatte (28) ein Fixierelement trägt, welches zu ihr rechtwinklig angeordnet ist und sich zum Fixieren des Schlosses an der hinteren Gabel durch die hintere Platte (2) ertreckt.

4. Fahrradschloß nach Anspruch 3, dadurch gekennzeichnet, daß die Fixierelemente mit Gewinde versehene Enden (46) aufweisen.

5. Fahrradschloß nach Anspruch 3, dadurch gekennzeichnet, daß die Fixierelemente mit Gewinde versehene Hülsen (42) aufweisen.

6. Fahrradschloß nach einem der Ansprüche 1 bis 5, dadurch gekennzeichnet, daß die Schloßvorderplatte (4), das Gehäuse, die Schutzplatte (28) und die hintere Platte (2) mit Hilfe von Nieten (34) miteinander verbunden sind, welche sich durch diese Teile ertrecken und deren Köpfe versenkt sind.

## Revendications

1. Serrure de bicyclette du type manille, comprenant un boîtier de serrure (4) qui est formé d'une plaque avant (4) et d'une plaque arrière (2) et qui comporte une chambre (6) dans laquelle est adapté un logement de serrure (22) dans lequel se logent la serrure et le mécanisme de verrouillage, et qui comporte deux guides incurvés (8, 10), sortant de chaque côté de ladite chambre, pour la manille de verrouillage (12), laquelle est entourée d'une lèvre de protection (32) allant du côté arrière du logement de serrure (22) au côté avant de la serrure, caractérisée en ce que ladite lèvre (32) part du bord bas d'une plaque de garde (28) en matière dure et résistante qui se loge entre le logement de serrure (22) et la plaque arrière (2).

2. Serrure de bicyclette suivant la revendication 1, caractérisée en ce que ladite plaque de garde (28) est prolongée du côté bouton de commande de serrure pour former une butée (38) pour la manille de verrouillage (12) en position ouverte.

3. Serrure de bicyclette suivant la revendication 1 ou 2, caractérisée en ce que la plaque de garde (28) porte une pièce de fixation perpendiculaire et passant dans la plaque arrière (2), pour fixer la serrure à la fourche arrière.

4. Serrure de bicyclette suivant la revendication 3, caractérisée en ce que lesdites pièces de fixation comprennent des tiges filetées (46).

5. Serrure de bicyclette suivant la revendication 3, caractérisée en ce que lesdites pièces de fixation comprennent des cylindres taraudés (42).

6. Serrure de bicyclette suivant l'une des revendications 1 à 5, caractérisée en ce que la plaque avant de serrure (4), le logement, la plaque de garde (28) et la plaque arrière (2) sont reliées ensemble par des rivets (34) qui passent à travers ces parties et dont les têtes sont fraisées.
